# EUROPEAN PATENT SPECIFICATION

(11) **EP 2 407 357 B1**
(45) Date of publication and mention of the grant of the patent: **21.03.2018**
(21) Application number: 10007415.2
(22) Date of filing: 17.07.2010
(51) Int. Cl.: B60T 7/22

(54) **Method for autonomously braking a motor vehicle and autonomous braking system for a motor vehicle**
Verfahren zum autonomen Bremsen eines Kraftfahrzeugs und autonomes Bremssystem für ein Kraftfahrzeug
Procédé de freinage autonome d'un véhicule à moteur et système de freinage autonome pour véhicule à moteur

(43) Date of publication of application: 18.01.2012
(73) Proprietor: Valeo Schalter und Sensoren GmbH, 74321 Bietigheim-Bissingen (DE)
(72) Inventor: Groult, Xavier, 95470 Survilliers (FR)

(56) References cited:
- EP-A1- 1 179 446
- WO-A1-2009/074690
- DE-A1- 4 310 354
- DE-A1- 10 237 714

## Description

The invention relates to a method for autonomously braking a motor vehicle by means of an autonomous braking system of the vehicle. An obstacle present in a surrounding area of the vehicle is detected by means of a sensor device of the vehicle. The vehicle is autonomously braked by means of the autonomous braking system upon a braking criterion in respect of a distance between the obstacle and the vehicle being fulfilled. At least one braking parameter is set for the autonomous braking. The invention also relates to an autonomous braking system for a motor vehicle, for autonomously braking the vehicle, wherein the system comprises a sensor device and a control unit.

Autonomous braking systems for autonomously braking a motor vehicle are already known from the prior art. For instance, autonomous braking can be applied while controlling a distance between the vehicle and a vehicle driving ahead. Here, so-called active cruise control (ACC) systems can be used. Furthermore, the vehicle may also be completely decelerated - i.e. completely braked - if a risk of a collision is detected, i.e. if a collision is imminent. For this purpose, a collision warning system can be used.

A method for autonomously braking a motor vehicle according to the preamble of claim 1 is known from document DE 102 37 714 A1.

An object of the present invention is to provide a solution as to how the reliability of an autonomous braking system can be improved over the prior art.

This problem is solved - according to the invention - by means of a method having the features of patent claim 1 as well as by an autonomous braking system having the features according to patent claim 13. Advantageous embodiments of the invention are subject-matter of the dependent claims and the description.

A method according to the invention serves to autonomously brake a motor vehicle by means of an autonomous braking system. A sensor device of the vehicle detects an obstacle present in a surrounding area of the vehicle. The autonomous braking system brakes the vehicle autonomously upon a braking criterion in respect of a distance between the obstacle and the vehicle being fulfilled. At least one braking parameter is set for the autonomous braking. A road surface parameter describing a road surface condition is determined and considered by the autonomous braking system for the autonomous braking.

Thus, according to the present invention, the autonomous braking system determines a road surface parameter which describes a road surface condition; and the autonomous braking system considers the road surface parameter for the autonomous braking. Therefore, the reliability of the autonomous braking system when braking the vehicle is improved over the prior art. For instance, the autonomous braking can be performed earlier and more smoothly on a slippery road to avoid the activation of an anti-lock braking system (ABS). On the other hand, the autonomous braking can be initiated later and applying more braking force on the vehicle wheels if a high-grip road surface is detected by the system. Therefore, safety and comfort can be improved over the prior art.

The autonomous braking system can autonomously brake the vehicle. This means that the vehicle is braked independently of the driver and thus independently of a brake pedal - by means of a control unit, for instance.

The autonomous braking system can have the function of an active cruise control system which controls a distance between the vehicle and a vehicle driving ahead. Then, the autonomous braking system can autonomously brake the vehicle in order to control the distance. Additionally or alternatively, the autonomous braking system can have a function of a collision warning system. In this case, the autonomous braking system can completely brake the vehicle if a risk of a collision is detected, i.e. a collision is imminent.

The sensor device may be any device known from the prior art. For example, the sensor device can comprise at least one ultrasonic sensor and/or at least one radar device and/or at least one LIDAR-device and/or at least one digital camera. The sensor device can be adapted to measure a distance between the vehicle and an obstacle detected in the surrounding area of the vehicle.

So, the autonomous braking system determines and considers the road surface parameter describing the road surface condition. In one embodiment, the braking criterion and/or the at least one braking parameter is dynamically set in dependence on the determined road surface parameter. In other words, a point in time for initiating the autonomous braking can be set depending on the determined road surface parameter. Alternatively or additionally, the braking procedure itself can be configured in dependency on the road surface parameter, namely by setting the at least one braking parameter. This embodiment has the advantage that the braking criterion and/or the automatic braking procedure itself can be adapted to specific current road surface conditions.

In one embodiment, the braking criterion comprises the condition that the distance between the obstacle and the vehicle falls below a limit distance value. Then, the limit distance value can be set in dependency on the determined road surface parameter. The automatic braking can be initiated earlier on a slippery road so that the activation of the ABS system can be avoided. On a high-grip road, on the other hand, the autonomous braking can be performed at a shorter distance since the road surface condition is better. A linear relationship between the limit distance value and the road surface parameter can be applied, for instance. Setting the limit distance value in dependency on the determined road surface parameter allows adapting the braking criterion to different road surface conditions.

The braking criterion can also comprise further conditions, namely a condition regarding a distance rate, i.e. a speed of a distance change, for instance. In one embodiment, the braking criterion may comprise the condition that the distance rate exceeds a limit rate value which can be set in dependency on the determined road surface parameter. The distance rate, in principle, is a relative velocity between the vehicle and the obstacle in the longitudinal direction of the vehicle.

Moreover, for the autonomous braking, a braking force exerted on a vehicle wheel as a braking parameter can be set in dependence on the determined road surface parameter. In this embodiment, a greater braking force can be applied to the vehicle wheel on a high-grip road surface than on a slippery one. The autonomous braking can be performed more smoothly on a slippery road surface. In this way, the activation of the ABS system can be avoided. The relationship between the braking force exerted on the vehicle wheel and the road surface parameter can also be a linear relationship. This embodiment has the advantage that by applying less braking force on a slippery road surface the safety of the passengers can also be improved.

The autonomous braking system determines the road surface parameter. This parameter can be a frictional coefficient between a vehicle tire and the road surface. This embodiment is based on the fact that the frictional coefficient (grip) describes the road surface condition well and thus allows drawing conclusions about the actual current road surface condition.

Different methods for determining the frictional coefficient between a vehicle tire and the road surface are known from the prior art. For instance, the method according to US 2005/0049774 A1 allows to determine the frictional coefficient in dependence on a yaw rate error calculation. Also, a ratio between the front wheel slip and the rear wheel slip is considered while determining the frictional coefficient. Furthermore, a method according to US 2008/0021626 A1 also uses information about a yaw rate error and is based on a comparison between this error and a threshold value. Both methods require vehicle dynamic conditions; this means that the frictional coefficient may only be estimated during a motion of the vehicle. For this reason, it is a challenge to provide a new method for determining the road surface parameter, in particular the frictional coefficient between the vehicle tire and the road surface:
The road surface parameter - in particular the frictional coefficient - can be determined in dependency on a parameter describing a weather condition. In particular, the road surface parameter is determined in dependence on a temperature of the surrounding area (i.e. outside temperature) and/or in dependence on a rain intensity. The temperature can be measured by a temperature sensor arranged on the vehicle. For determining the rain intensity, several embodiments are provided: For instance, the rain intensity can be measured by a sensor. Additionally or alternatively, information about the rain intensity can be gathered from a signal of a windscreen wiper control device. Such a signal can, for instance, be picked up on a communication bus of the vehicle. Determining the road surface parameter depending on at least one parameter describing the weather condition is very advantageous: The road surface parameter can be determined even at standstill of the vehicle. It is not required that the vehicle is in motion, and, in particular, driving curves it is not required, either. This embodiment can be used for estimating one road surface parameter value. This value can then be combined with at least one other road surface parameter value estimated during a motion of the vehicle.

In dependence on at least one parameter describing the weather condition, an assumption can be made for the road surface parameter. For instance, the road surface parameter can be assumed to be equal to 0.1 if the outside temperature falls below 0°C and rain is detected by the system. Furthermore, the frictional coefficient can be assumed to be equal to 0.8 if the outside temperature is greater than 0°C and if rain is detected. On the other hand, if no rain is detected by the system, the frictional coefficient can be assumed to be equal to 0.9 if the temperature is less than 20°C and equal to 1 if the temperature is greater than 20°C. Thus, an assumption regarding the road surface parameter can be made even at standstill of the vehicle. The assumed road surface parameter can then be upgraded and adapted during a motion of the vehicle depending on driving dynamic condition parameters.

The road surface parameter can also be determined during a motion of the vehicle. For instance, the road surface parameter can be determined in dependence on a parameter describing a force exerted on a vehicle wheel in longitudinal direction of the vehicle while accelerating or braking the vehicle by the driver. This embodiment is based on the fact that the frictional coefficient can be defined as a ratio between the maximum longitudinal (braking or accelerating) force and a load on the vehicle axle. It has turned out to be advantageous when a master cylinder pressure of a vehicle braking device is used as a parameter describing the force exerted on the vehicle wheel in longitudinal direction. For determining the frictional coefficient, a current master cylinder pressure - this can be set by a vehicle dynamics control system (like ESP) - can be divided by a maximum pressure value measured within a predefined period of time. In this way, the current master cylinder pressure can be normalized and used to determine the frictional coefficient. The frictional coefficient determined in such a way can then be combined with the frictional coefficient determined depending on the parameter describing the weather condition. In this way, the road surface parameter can be determined with a great degree of precision.

It is very advantageous to determine whether an anti-lock braking system (ABS) of the vehicle is activated or not. Then, while determining the road surface parameter, information can be considered whether the ABS is activated or not. Such information allows drawing conclusions about the current frictional coefficient and thus determining the road surface parameter with a maximum degree of precision. In this embodiment, if the ABS is activated, the road surface parameter can be determined in dependence on a lateral acceleration of the vehicle and/or in dependence on a parameter describing a force exerted on a vehicle wheel in longitudinal direction of the vehicle, i.e., for instance, depending on the master cylinder pressure. Consequently, the road surface parameter can be determined with great accuracy. Since the road surface parameter can be determined with a maximum degree of precision while the ABS is activated, the road surface parameter value previously estimated depending on the weather condition can now be modified or even replaced by the road surface parameter determined while the ABS is activated.

The road surface parameter can be determined in dependence on a result of a comparison between a longitudinal acceleration and a lateral acceleration of the vehicle while driving curves, in particular between a maximum value of the longitudinal acceleration and a maximum value of the lateral acceleration (GG-plot). In this way, the road surface parameter is determined depending on driving dynamic conditions of the vehicle. Thus, the road surface parameter can be determined accurately. For instance, a frictional coefficient value can be estimated while driving curves depending on the result of said comparison, and a frictional coefficient value previously estimated depending on the weather condition can then be corrected depending on the value estimated in dependence on said comparison.

Also, the road surface parameter can be determined in dependence on the longitudinal acceleration and/or the lateral acceleration of the vehicle, in particular depending on the maximum value of the longitudinal acceleration and/or the maximum value of the lateral acceleration measured within a predetermined period of time. For instance, the longitudinal and/or the lateral acceleration can be compared with predefined reference values, and the road surface parameter can be determined in dependence on the result of this comparison.

As has been set out above, the road surface parameter can be determined in dependence on diverse parameters and thus according to different estimating methods. In one embodiment, for determining the road surface parameter, at least two road surface parameter values are estimated according to different estimating methods. Then, the road surface parameter can be calculated from the at least two road surface parameter values. In particular, the frictional coefficient is estimated in at least two different ways, i.e. according to at least two different estimating rules; the final frictional coefficient can then be calculated from the at least two frictional coefficients. In this way, the probability of errors can be minimized, and the road surface parameter - in particular the frictional coefficient - is calculated with a maximum degree of precision.

In this embodiment, weighting factors can be used for the at least two road surface parameter values while calculating the final road surface parameter. It has turned out to be very advantageous when the weighting factors are set in dependency on a driving condition of the vehicle. The estimation of the road surface parameter in this way can be adapted to different driving conditions of the vehicle, namely, for instance: a standstill, accelerating, braking, driving curves and the like. In one example, each of the at least two different road surface parameter values can be multiplied by an associated weighting factor, and the results of these multiplications can be added while calculating the final road surface parameter.

The probability of making an error in determining the final road surface parameter can be minimized when the at least two estimating methods differ from each other in at least one parameter in dependence on which the at least two road surface parameter values are estimated. That means that the at least two estimating methods differ from each other in that at least one different parameter is used for estimating the road surface parameter value. According to the invention the final road surface parameter is calculated from at least two of the following road surface parameter values:
- a road surface parameter value estimated in dependence on a parameter describing a weather condition, in particular in dependence on a temperature of the surrounding area and/or in dependence on the rain intensity;
- a road surface parameter value estimated in dependence on a parameter describing a force exerted on a vehicle wheel in longitudinal direction of the vehicle while braking the vehicle by the driver, i.e. depending on a master cylinder pressure, for instance;
- a road surface parameter value estimated in dependence on a lateral acceleration of the vehicle and/or in dependence on a parameter describing a force exerted on a vehicle wheel in longitudinal direction of the vehicle, if the ABS is activated;
- a road surface parameter value estimated depending on a result of a comparison between a longitudinal acceleration and a lateral acceleration of the vehicle while driving curves.

In one embodiment, the autonomous braking system can determine whether a tunnel is detected in front of the vehicle or not. If a tunnel is detected, an assumption can be made regarding the road surface parameter. For example, the frictional coefficient can be assumed to be equal to 1. The frictional coefficient can be assumed to be equal to 1 for a period of time during which the vehicle is being driven in the tunnel.

According to the present invention, there is also provided an autonomous braking system for a motor vehicle, for autonomously braking the vehicle. The system comprises a sensor device for detecting an obstacle present in a surrounding area of the vehicle. Furthermore, the system comprises a control unit for autonomously braking the vehicle upon a braking criterion in respect of a distance between the obstacle and the vehicle being fulfilled. The control unit is adapted to set at least one braking parameter for the autonomous braking. According to the invention, the control unit is adapted to determine a road surface parameter describing a road surface condition and to consider the road surface parameter for the autonomous braking.

The embodiments presented as preferable with regard to the method according to the present invention and their advantages apply analogously to the autonomous braking system according to the invention.

The invention is now set out in more detail on the basis of individual embodiments as well as by making reference to the enclosed drawings.

These show in:
- Fig. 1: a schematic view of a vehicle comprising an autonomous braking system according to one embodiment of the invention;
- Fig. 2: a flow diagram of a method according to one embodiment of the present invention;
- Figs. 3 to 6: each a logic diagram (here, a Matlab-Simulink diagram) of an estimating method for determining a frictional coefficient value; and
- Fig. 7: a flow diagram of a method for calculating a final frictional coefficient from the estimated frictional coefficient values.

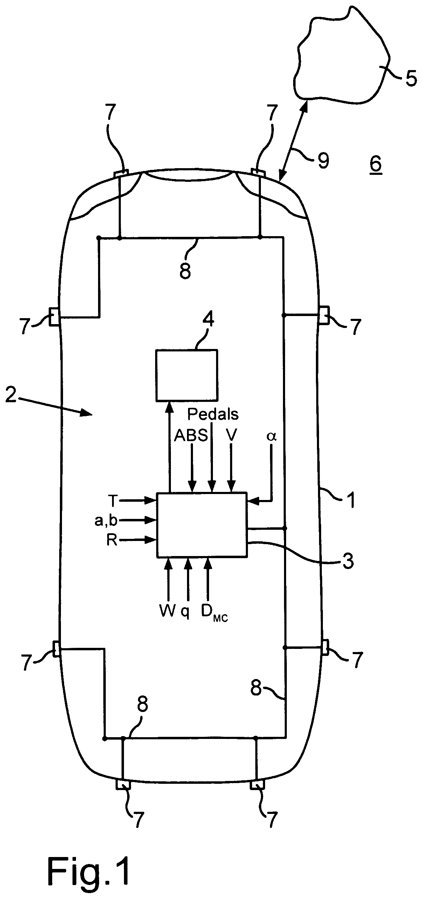

A vehicle 1 shown in fig. 1 is, for instance, a passenger car. The vehicle 1 has an autonomous braking system 2 for autonomously braking the vehicle 1. The autonomous braking system 2 comprises a control unit 3 which can comprise a digital signal processor, a microcontroller as well as a memory. For the purpose of autonomous braking, the control unit 3 is electrically connected to a braking control device 4 of the vehicle 1. The control unit 3 can set diverse braking parameters while autonomously braking the vehicle 1. For instance, the control unit 3 can set a braking force applied for autonomous braking, i.e. a force exerted on the vehicle wheels. The control unit 3 can set a pressure that is applied on a braking device of the vehicle 1. This can, for instance, be a master cylinder pressure.

The control unit 3 brakes the vehicle 1 autonomously, i.e. independently of a driver action and thus independently of an actuation of the brake pedal. The control unit 3 brakes the vehicle 1 if there is a risk of a collision between the vehicle 1 and an obstacle 5 present in a surrounding area 6 of the vehicle 1. If a risk of a collision is detected by the control unit 3, the autonomous braking is performed by means of the control unit 3.

For detecting the obstacle 5, the autonomous braking system 2 comprises a sensor device 7, which can comprise diverse sensors fixed to a surface of the vehicle 1. The sensor device 7 is shown in fig. 1 in a schematic and abstract way; this means that the number and the location of the sensors is presented in exemplary and may vary. The sensor device 7 can comprise at least one ultrasonic sensor and/or at least one radar device and/or at least one digital camera. The sensor device 7 is electrically connected to a communication bus 8 and can transmit measured data through the communication bus 8 to the control unit 3. Namely, the control unit 3 is also electrically connected to the bus 8. In dependence on the measured data the control unit 3 can determine a distance 9 between the obstacle 5 and the vehicle 1. Additionally, the control unit 3 can determine a relative velocity between the obstacle 5 and the vehicle 1 in the longitudinal direction of the vehicle 1.

The control unit 3 brakes the vehicle 1 upon a braking criterion being fulfilled. This braking criterion may comprise conditions regarding the distance 9 as well as the relative velocity between the obstacle 5 and the vehicle 1. For instance, the braking criterion can comprise the condition that the distance 9 falls below a limit distance value as well as the condition that the relative velocity exceeds a limit velocity value.

For the autonomous braking, the control unit 3 determines a frictional coefficient µ between a vehicle tire and a road surface on which the vehicle 1 is moving. The frictional coefficient µ is a road surface parameter and thus describes the current road surface condition.

In dependence on the determined frictional coefficient, the control unit 3 sets the braking criterion as well as the braking parameters. The control unit 3 sets the limit distance value and the limit velocity value for the braking criterion depending on the calculated frictional coefficient µ. Moreover, the braking force - i.e. the pressure - is set by the control unit 3 depending on the calculated frictional coefficient µ.

For determining the frictional coefficient µ, the control unit 3 receives diverse information about weather conditions as well as driving conditions. The control unit 3 receives a signal comprising information about an outside temperature T - this signal can be generated by a temperature sensor. Furthermore, the control unit 3 receives a signal comprising information about rain intensity R - this signal can be generated by a rain sensor - and/or a signal comprising information W whether a windscreen wiper is activated or not. Here, the control unit 3 can determine whether it is raining or not. Furthermore, the control unit 3 receives a signal comprising information about a longitudinal acceleration "a" respective a longitudinal deceleration "b" of the vehicle 1. The control unit 3 also receives a signal comprising information about a lateral acceleration "q" of the vehicle 1. Further signals received by the control unit 3 comprise information about an activating state of the ABS, a brake pedal travel, an acceleration pedal travel, a velocity "v" of the vehicle 1, a steering angle α of a steering wheel as well as a master cylinder pressure D_{MC}.

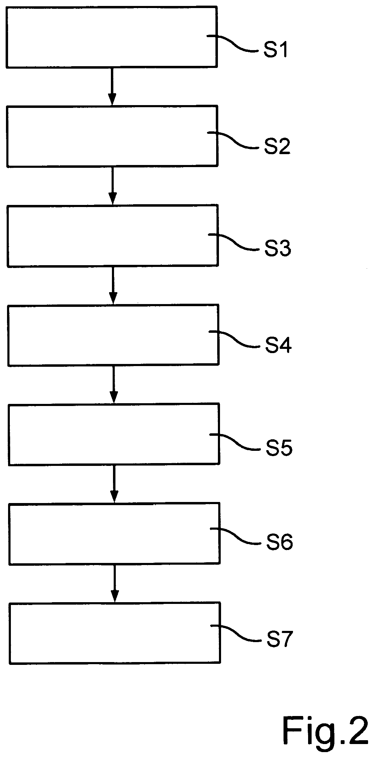

Referring now to fig. 2, a method according to one embodiment of the present invention is explained in more detail: In step S1, the obstacle 5 is detected by the sensor device 7. In further step S2, the control unit 3 tracks the obstacle 5. In step S3, the control unit 3 calculates the frictional coefficient µ. In further step S4, the control unit 3 defines the braking criterion depending on the calculated frictional coefficient µ. In step S5, the control unit 3 sets the braking parameters depending on the calculated frictional coefficient µ. In step S6, the control unit 3 determines whether the braking criterion is fulfilled or not. If the braking criterion is fulfilled, the control unit 3 brakes the vehicle 1 completely, namely in step S7.

For determining the total frictional coefficient µ, the control unit 3 estimates four different frictional coefficient values, namely according to different estimating methods. The control unit 3 estimates the following different frictional coefficient values:
- a frictional coefficient µ_{W} (µ_{Weather}) according to an estimating method based on parameters describing weather conditions, e.g. the outside temperature T and the rain intensity R;
- a frictional coefficient µ_{B} (µ_{Brake}) according to an estimating method based on a parameter describing a force exerted on the vehicle 1 in the longitudinal direction while braking the vehicle 1; this frictional coefficient µ_{B} is estimated in dependency on the master cylinder pressure D_{MC} of the braking device of the vehicle 1;
- a frictional coefficient µ_{ABS} according to an estimating method based on parameters measured while the ABS is activated;
- a frictional coefficient µ_{D} (µ_{Dynamics}) according to an estimating method based on parameters describing driving dynamic vehicle conditions while driving curves.

The four different values of the frictional coefficient µ_{W}, µ_{B}, µ_{ABS} and µ_{D} are then combined, and the total frictional coefficient µ is calculated from the four values.

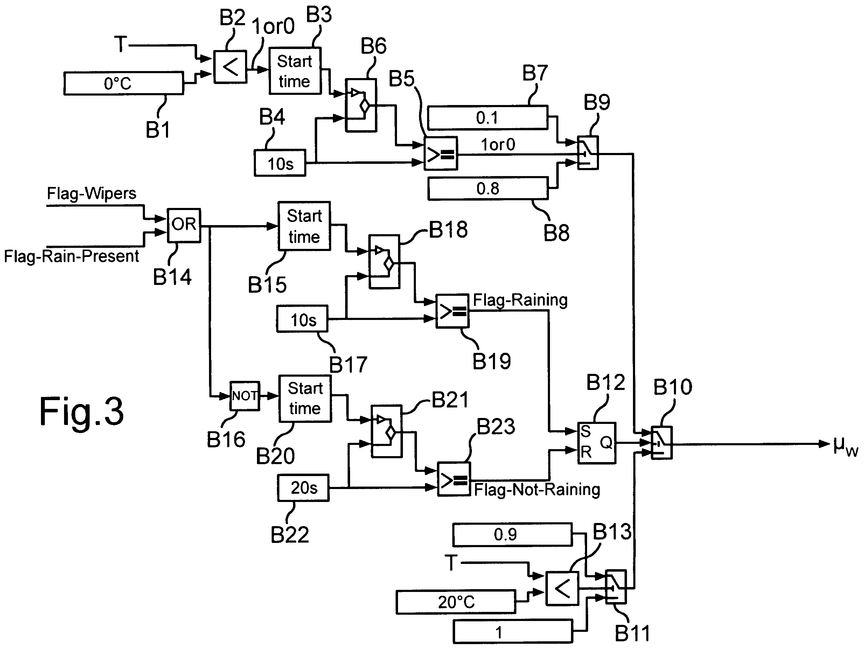

Relating now to fig. 3, the estimating of the frictional coefficient according to the "weather" estimating method is explained in more detail. Fig. 3 represents a logic diagram of this estimating method. There are three input parameters, namely the outside temperature T as well as a flag parameter "Flag-Wipers" - this parameter is equal to "1" if the windscreen wipers are activated and is equal to "0" if the wipers are deactivated - and a flag parameter "Flag-Rain-Present" - this parameter is equal to "1" if rain is detected by means of the rain sensor, otherwise this parameter is equal to "0". In a logic block B1 a first limit value for the temperature T can be predefined. In this case, the first limit value is equal to 0°C. A logic block B2 receives the current outside temperature T as well as the first limit value. In this block B2 it is determined whether the current temperature T falls below 0°C or not. An output of the block B2 is a Flag which can be equal to "1" if the temperature T falls below 0°C or equal to "0" if the temperature T is greater than 0°C. This Flag is received by a logic block B3, which measures the time since a point in time at which the block B2 outputs a Flag equal to "1". A time value is output by the block B3, and a limit value for this time is predefined in a block B4. The limit value is set to 10 seconds, in this embodiment. If the time value measured by the block B3 is greater than 10 seconds, the time value counted by the block B3 is received by a block B5 which outputs "1" if the counted time is greater or equal to 10 seconds and "0" if the time is less than 10 seconds. The time is transmitted through a logic block B6 which lets the time value through upon the counted time being greater than 10 seconds.

In blocks B7 and B8 two different values for the frictional coefficient µ_{W} are predefined. These two values, namely 0.1 and 0.8, are input to a switch block 9 which outputs 0.1 if the block B5 outputs "1" and 0.8 if the block B5 outputs "0". So, an assumption is made according to the frictional coefficient µ_{W}, namely depending on the temperature T.

The output value of the block B9 is input to a switch block B10 which can output two different values: either a value output by the switch block B9 or a value output by a switch block B11. The output of the block B10 depends on a value output by a RS-memory block B12 which can output "0" or "1".

The switch block B11 can output either a value of 0.9 or 1, depending on the current temperature T. Namely, a logic block B13 receives the temperature T and a second limit value for the temperature - 20°C - and compares the temperature with the second limit value. If the current temperature T is less than 20°C, the block B11 outputs the value of 0.9. If the temperature is greater than 20°C, the block B11 outputs the value of 1. So, in principle, four different values for the frictional coefficient µ_{W} are assumed, namely 0.1 or 0.8 or 0.9 or 1.

An "OR"-block B14 receives the parameter "Flag-Wipers" and the parameter "Flag-Rain-Present". If any one of these Flags or both Flags are equal to "1", the block B14 outputs "1". Otherwise, "0" is output by the block B14. On the one hand, the output of the block B14 is received by a counting block B15; on the other hand, the output of the block B14 is received by a "NOT"-block B16. The counting block B15 counts the time since a point in time at which the block B14 outputs "1". If this time is greater than 10 seconds - predefined in a block B17 - this time value is put through a block B18 and received by a comparing block B19 which outputs a parameter "Flag-Raining". The "Flag-Raining" can be equal to "1" or to "0". If the time value from the block B15 is greater than 10 seconds, the "Flag-Raining" is equal to "1". Otherwise, the "Flag-Raining" is equal to "0". The Flag-Raining is received by an S-port of the RS-memory block B12.

The output of the "OR"-block B14 is negated by the "NOT"-block B16. So, the "NOT"-block B16 outputs "1" if it is not raining and "0" if it is raining. The output of the "NOT"-block B16 is received by a counting block B20 that counts the time since a point in time at which "1" is output by the "NOT"-block B16. The time value is put through a block B21 if the time value is greater than 20 seconds - predefined in a block B22. Then, the time value is compared with the value of 20 seconds by means of a block B23. The block B23 outputs the parameter "Flag-Not-Raining" which is equal to "1" if it is not raining and equal to "0" if it is raining. This "Flag-Not-Raining" is received by the RS-memory block B12, namely at an R-port. In principle, the RS-memory block B12 outputs "1" if it is raining and "0" if it is not raining.

In summary, the frictional coefficient µ_{W} is assumed to have one of the values 0.1 or 0.8 or 0.9 or 1, namely depending on the weather conditions:
- µ_{W} = 0.1 if T < 0°C and it is raining;
- µ_{W} = 0.8 if T > 0°C and it is raining;
- µ_{W} = 0.9 if T < 20°C and it is not raining;
- µ_{W} = 1 if T > 20°C and it is not raining.

Therefore, the frictional coefficient µ_{W} can be estimated even at standstill of the vehicle 1.

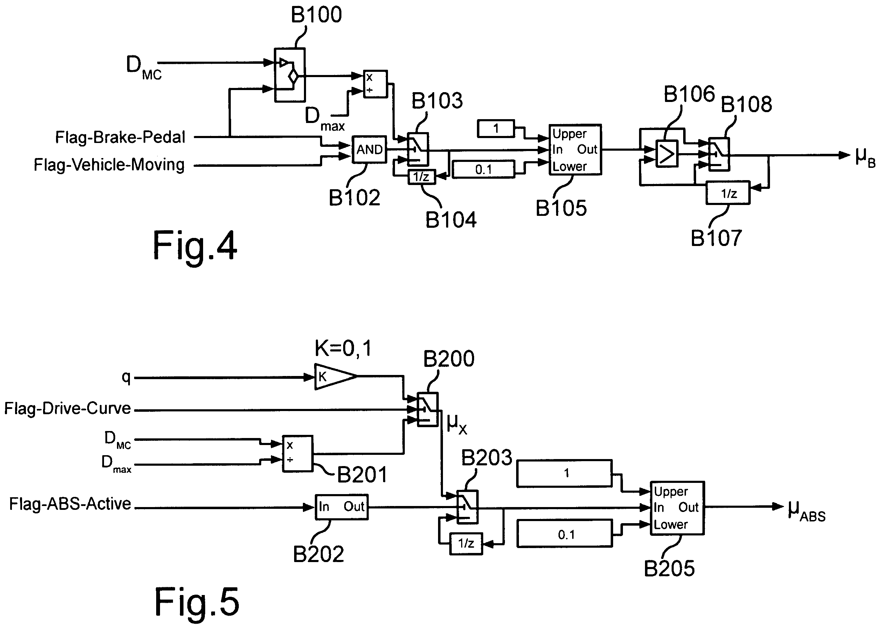

Relating now to fig. 4, the estimating method for estimating the frictional coefficient µ_{B} depending on braking conditions of the vehicle 1 is explained in more detail. Input parameters are: the master cylinder pressure D_{MC} as well as the "Flag-Brake-Pedal" and the "Flag-Vehicle-Moving". The "Flag-Brake-Pedal" is equal to "1" if the brake pedal is actuated, i.e. if the brake pedal travel is greater than a predefined value. Otherwise, the "Flag-Brake-Pedal" is equal to "0". The "Flag-Vehicle-Moving" is equal to "1" if the vehicle 1 is in motion, i.e. if the velocity v is greater than 0 kph. Otherwise, the "Flag-Vehicle-Moving" is equal to "0". The value of the master cylinder pressure D_{MC} is put through a block B100 if the "Flag-Brake-Pedal" is equal to "1". The value of D_{MC} is then received by a calculating block B101 which divides the value of D_{MC} by a Dₘₐₓ. The Dₘₐₓ is a factor to transfer the master cylinder pressure D_{MC} to a longitudinal deceleration of the vehicle. This means that the Dₘₐₓ is a pressure value at which a maximum deceleration of the vehicle is reached and the µ can be assumed to be equal to 1. Dₘₐₓ is equal to 100 bars for a common vehicle. Roughly, at 100 bars, the maximum deceleration of the vehicle can be reached and the µ can be assumed to be equal to 1. The D_{MC} is the current master cylinder pressure. The master cylinder pressure D_{MC} can be set by means of a vehicle dynamics control system, like the ESP. So, the estimating method falls back on information from the vehicle dynamics control system. The current pressure D_{MC} is divided by the factor Dₘₐₓ and the result of this normalization is output by the block B101.

The Flags "Flag-Brake-Pedal" and "Flag-Vehicle-Moving" are received by an "AND"-block 102 which outputs "1" if both Flags are equal to "1". Otherwise, "0" is output. In dependence on the output of the "AND"-block B102, a switch block B102 switches between the result value of the division and a value being output by the switch block B103. If a braking condition is detected - i.e. the vehicle is braked by the driver - the switch block 103 outputs the result value of the block B101. Otherwise, the preceding value picked up on the output port by means of a delay block B104 is output by the block B103. Anyway, the switch block B103 outputs a value for the frictional coefficient µ_{B} which should be between 0.1 and 1. If this value of µ_{B} exceeds the value of 1 or falls below the value of 0.1, a bounding block B105 limits the value of µ_{B}. The value output by the bounding block B105 thus is a value between 0.1 and 1. This value is received by a comparing block B106 which compares the current value with an old value picked up by means of a delay block B107. The greater of these values is then output by means of a switch block B108. In summary, the frictional coefficient µ_{B} is equal to a maximum value of D_{MC}/Dₘₐₓ.

The final frictional coefficient µ can be assumed to be at least equal to µ_{B}. For example, if µ_{B} = 0.4, the final µ can be equal to a value between 0.4 and 1.

With reference now to fig. 5, a further estimating method for estimating the frictional coefficient µ_{ABS} based on parameters measured while the ABS is activated is described in greater detail. Input parameters are: the lateral acceleration q of the vehicle 1, the parameter "Flag-Drive-Curve", the master cylinder pressure D_{MC}, the maximum pressure Dₘₐₓ as well as the parameter "Flag-ABS-Active". The Flag "Flag-Drive-Curve" is equal to "1" if a curve is detected. Otherwise, this Flag is equal to "0". For instance, the curve may be detected by means of the steering angle α and/or by means of the lateral acceleration q. The Flag "Flag-ABS-Active" is equal to "1" if the ABS is active. Otherwise, this Flag is equal to "0". Such information can be picked up on a communication bus of the vehicle 1.

Depending on the "Flag-Drive-Curve", a switch block B200 may output different values. Namely, this block B200 can output the result of a multiplication of the lateral acceleration q and a gain factor K. The gain factor K can be equal to 0.1. This result is output by the block B200 if the "Flag-Drive-Curve" is equal to "1". Otherwise, the block B200 outputs a result of the division of D_{MC} by Dₘₐₓ performed by means of a division block B201. Anyway, the switch block B200 outputs a value µ_{X}.

If the ABS is activated, the "Flag-ABS-Active" is equal to "1" for a short period of time. This is detected by an edge detecting block B202. This block B202 outputs "1" for a predefined period of time upon detecting the ABS activation. The block B202 can switch a switch block B203 between a state in which the value µ_{X} is output and a state in which a preceding output value is picked up by means of a delay block B204 and output. So, the switch block B203 outputs the µ_{X} if an activation of the ABS is detected; otherwise, the old value is output. The switch block B203 outputs a value between 0.1 and 1 which is received by a bounding block B205. This value is limited by the block B205. This means that the µ_{ABS} is a value between 0.1 and 1.

In summary, the frictional coefficient µ_{ABS} is equal to q * K if a curve is detected; otherwise, the frictional coefficient µ_{ABS} is equal to D_{MC}/Dₘₐₓ.

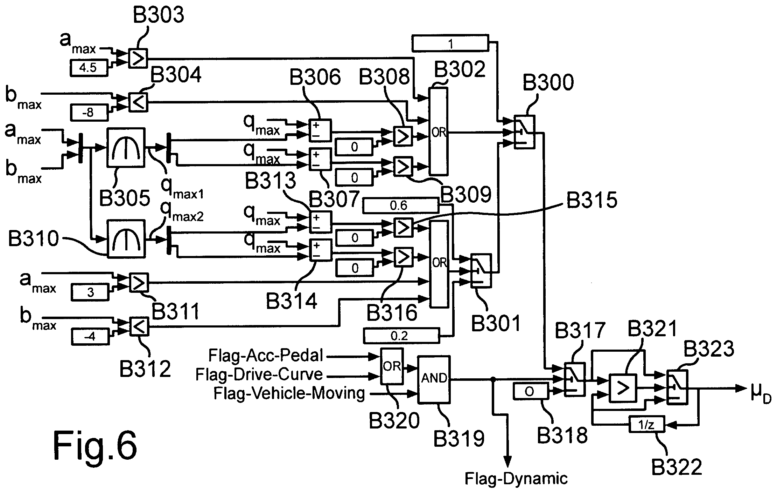

Finally, relating to fig. 6, an estimating method for estimating the frictional coefficient µ_{D} is explained in more detail. Input parameters are the maximum longitudinal velocity aₘₐₓ of the vehicle 1 measured within a predetermined period of time, the maximum deceleration bₘₐₓ (i.e. minimum negative acceleration) measured within a predetermined period of time, the parameter "Flag-ACC-Pedal" which describes the state of the acceleration pedal of the vehicle 1, the parameter "Flag-Drive-Curve" and the parameter "Flag-Vehicle-Moving". The Flag "Flag-ACC-Pedal" is equal to "1" if the acceleration pedal is activated. Otherwise, this Flag is equal to "0". A switch block B300 can output a value of 1 or a value output by a switch block B301, namely 0.6 or 0.2. The switch block B300 outputs the value of 1 if at least one of predetermined conditions is fulfilled. Namely, an "OR"-block B302 then outputs the value of 1. One of said conditions is that the maximum longitudinal acceleration aₘₐₓ is greater than a predetermined value, namely 4.5 m/s². This condition is checked by a block B303. A further condition is that the maximum deceleration bₘₐₓ is less than a predefined value, namely -8 m/s². This condition is checked by a block B304. Another condition is that the maximum lateral acceleration qₘₐₓ of the vehicle 1 is greater than a maximum lateral acceleration qₘₐₓ₁ calculated by means of a "GG-plot" block B305. For this calculation an assumption is made regarding the frictional coefficient. For this calculation, the frictional coefficient can be assumed to be equal to 1, for instance. The maximum lateral acceleration qₘₐₓ₁ is calculated on the basis of a GG-plot, namely on the basis of the maximum acceleration aₘₐₓ respective deceleration bₘₐₓ. To check this condition, blocks B306 to B309 are provided, as shown in fig. 6.

So, the switch block B300 outputs the value of 1 if at least one of said conditions is fulfilled. These conditions are:
- the maximum longitudinal acceleration aₘₐₓ is greater than 4.5 m/s²;
- the maximum deceleration (minimum acceleration) bₘₐₓ is less than -8 m/s²;
- the maximum measured lateral acceleration qₘₐₓ is greater than the calculated lateral acceleration qₘₐₓ₁.

If none of said conditions is fulfilled, the switch block B300 outputs a value which is output by the switch block B301. This value can be 0.6 or 0.2. The value of 0.6 is output if at least one of the following conditions is fulfilled; otherwise, the value of 0.2 is output. The first condition is that the maximum measured lateral acceleration qₘₐₓ is greater than a lateral acceleration qₘₐₓ₂ calculated on the basis of a second GG-plot depending on the measured lateral acceleration aₘₐₓ respective bₘₐₓ. For this purpose, a second "GG-plot" block B310 is provided for which an assumption is made regarding the frictional coefficient. This frictional coefficient can be assumed to be less than the frictional coefficient for the first "GG-plot" block B305. For instance, this frictional coefficient can be assumed to be equal to 0.6. This condition is checked by means of blocks B313 to B316. A further condition is that the maximum measured longitudinal acceleration aₘₐₓ is greater than 3 m/s², which is checked by a block B311. The last condition is that the maximum deceleration bₘₐₓ is less than -4 m/s², which is checked by means of a block B312. If at least one of said conditions is fulfilled, the switch block B301 outputs the value of 0.6; otherwise, the value of 0.2 is output by the block B301.

So, the switch block B300 can output the values 1 or 0.6 or 0.2. This value output by the switch block B300 is received by a further switch block B317. This block B317 also receives a value of 0, which is predefined in a block B318. The switch block B317 can output either the value of the block B300 or the value of 0, namely depending on an output of an "AND"-block B319. If this output is equal to "1", the switch block B317 outputs the value of the block B300; otherwise, the value of 0 is output by the switch block B317. The "AND"-block B319 on the one hand receives the parameter "Flag-Vehicle-Moving" and on the other hand an output of an "OR"-block B320. The "OR"-block B320 outputs "1" if at least one of the Flags "Flag-ACC-Pedal" or "Flag-Drive-Curve" is equal to "1". Otherwise, the "OR"-block B320 outputs "0". The "AND"-block B319 outputs "1" if both the output of the "OR"-block B320 and the parameter "Flag-Vehicle-Moving" are equal to "1". Otherwise, "0" is output by the "AND"-block B319.

The output value of the switch block B317 is received by a comparing block B321 and compared with the previous value of µ_{D} picked up by a delay block B322. If the output value of the switch block B317 is greater than the previous value of µ_{D}, a switch block B322 outputs the output value of the switch block B317. Otherwise, the previous value of µ_{D} is output by the switch block B323.

In summary, the frictional coefficient µ_{D} can be equal to 1 or 0.6 or 0.2 or 0, namely depending on driving dynamic conditions of the vehicle 1, i.e. depending on dynamic parameters like the longitudinal acceleration a or b and the lateral acceleration q. The final frictional coefficient µ can be assumed to be at least equal to µ_{D}. For example, if µ_{D} = 0.4, the final µ can be equal to a value between 0.4 and 1.

Finally, we have four different frictional coefficients M_{W}, µ_{B}, µ_{ABS}, and µ_{D} estimated according to different estimating methods. Now, the final frictional coefficient µ is calculated from the estimated coefficients µ_{W}, µ_{B}, µ_{ABS}, and µ_{D}.

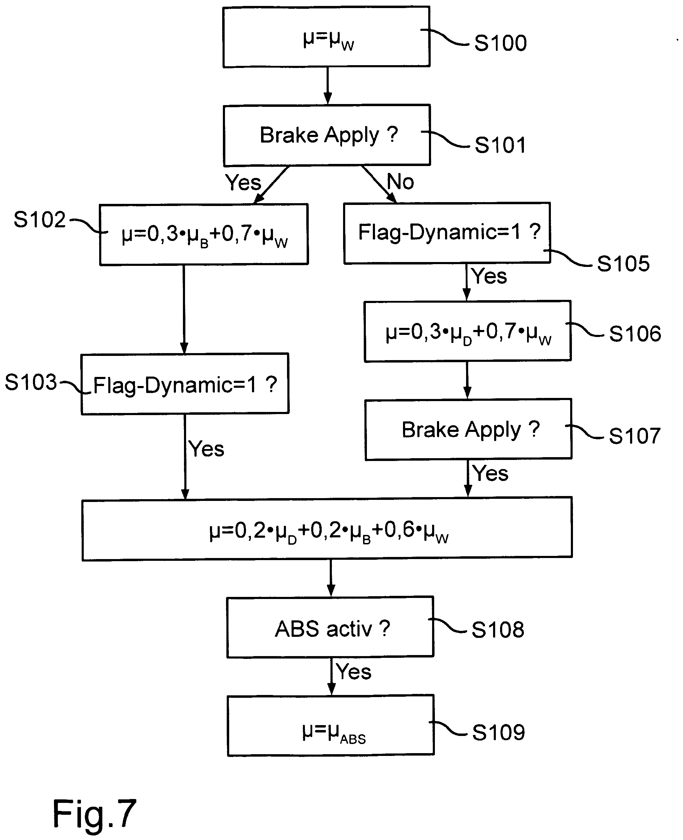

Referring now to fig. 7, a method is explained in more detail as to how the total frictional coefficient µ can be calculated.

As the default state (initial state), the frictional coefficient µ is equal to the frictional coefficient µ_{W} according to the "weather estimation". For instance, this can be estimated at standstill of the vehicle 1. This is performed in step S100.

In further step S101, the control unit 3 determines whether the vehicle 1 is braked by the driver or not. For this purpose, the control unit 3 can analyze the signal comprising information about the brake pedal travel. If the brake pedal is actuated by the driver, the frictional coefficient µ_{B} is estimated, namely according to the method shown in fig. 4. Then, the final frictional coefficient µ is assumed to be equal to 0.3µ_{B} + 0.7µ_{W}. This calculation is performed in step S102.

Then, the control unit 3 determines if a parameter "Flag-Dynamic" is equal to "1" or not. This parameter value is picked up at the output port of the "AND"-block B319 (see fig. 6). If "Flag-Dynamic" is equal to "1" - which is determined in step S103 - the method changes to the next step S104.

If no braking is applied in step S101, the control unit 3 determines if the parameter "Flag-Dynamic" is equal to "1" or to "0", namely in step S105. If the "Flag-Dynamic" is equal to "1", the control unit 3 estimates the frictional coefficient µ_{D} and calculates in step S106 the final frictional coefficient µ: µ = 0.3µ_{D} + 0.7µ_{W}. Then, in step S107, the control unit 3 determines if the brake pedal is activated or not. If braking is applied by the driver, the method changes to step S104. In step S104, the control unit 3 calculates the total frictional coefficient: µ = 0.2µ_{D} + 0.2µ_{B} + 0-6µ_{W}.

Then, in step S108 the control unit 3 determines whether the ABS is activated or not. If the ABS is activated, the control unit 3 calculates in step S109 the frictional coefficient µ_{ABS}. Since this estimation uses the maximum longitudinal force and thus µ_{ABS} is estimated with maximal accuracy, the final frictional coefficient µ is assumed to be equal to µ_{ABS}.

The control unit 3 may also receive a signal comprising information about whether a tunnel is detected in front of the vehicle 1 or not. Such information can be provided on the CAN-bus of the vehicle 1. If a tunnel is detected, the frictional coefficient µ can be assumed to be equal to 1. The frictional coefficient µ can then be assumed to be equal to 1 for a period of time during which the vehicle 1 is being driven in the tunnel.

## Claims

1. A method for autonomously braking a motor vehicle (1) by means of an autonomous braking system (2) of the vehicle (1), comprising the steps of:
- detecting an obstacle (5) present in a surrounding area (6) of the vehicle (1) by means of a sensor device (7) of the vehicle (1),
- autonomously braking the vehicle (1) by means of the autonomous braking system (2) upon a braking criterion in respect of a distance (9) between the obstacle (5) and the vehicle (1) being fulfilled, wherein at least one braking parameter is set for the autonomous braking,
while a road surface parameter (µ) describing a road surface condition is determined and considered by the autonomous braking system (2) for the autonomous braking **characterized in that**
for determining the road surface parameter (µ) at least two road surface parameter values (µ_{W}, µ_{B}, µ_{ABS}, µ_{D}) are estimated according to different estimating methods, and
the road surface parameter (µ) is calculated from at least two of the following road surface parameter values µ_{W}, µ_{B}, µ_{ABS}, µ_{D}):
- a road surface parameter value µ_{W}) estimated in dependency on a parameter describing a weather condition, in particular in dependency on a temperature (T) of the surrounding area (6) and/or in dependency on a rain intensity (R);
- a road surface parameter value (µ_{B}) estimated in dependency on a parameter (D_{MC}) describing a force exerted on a vehicle (1) wheel in longitudinal direction of the vehicle (1) while braking the vehicle (1) by the driver;
- a road surface parameter value µ_{ABS}) estimated in dependency on a lateral acceleration (q) of the vehicle (1) and/or in dependency on a parameter (D_{MC}, a) describing a force exerted on a vehicle (1) wheel in longitudinal direction of the vehicle (1), if an Anti-Lock Braking System is activated;
- a road surface parameter value (µ_{D}) estimated in dependency on a result of a comparison between a longitudinal acceleration (a, b) and a lateral acceleration (q) of the vehicle (1).

2. The method according to claim 1
**characterized in that**
while calculating the road surface parameters (µ) weighting factors are used for the at least two road surface parameter values (µ_{W}, µ_{B}, µ_{ABS}, µ_{D}), wherein the weighting factors are set in dependency on a driving condition of the vehicle (1).

3. The method according to claim 1 or 2,
**characterized in that**
the at least two estimating methods differ from each other **in that** at least one different parameter (T, R, a, b, q, D_{MC}) is used for estimating the road surface parameter value (µ_{W}, µ_{B}, µ_{ABS}, µ_{D}).

4. The method according to any one of the preceding claims,
**characterized in that**
the braking criterion and/or the at least one braking parameter is set in dependency on the determined road surface parameter (µ).

5. The method according to any one of the preceding claims,
**characterized in that**
the braking criterion comprises the condition that the distance (9) between the obstacle (5) and the vehicle (1) falls below a limit distance value, wherein the limit distance value is set in dependency on the determined road surface parameter (µ).

6. The method according to any one of the preceding claims,
**characterized in that**
for the autonomous braking a braking force exerted on a vehicle (1) wheel as a braking parameter is set in dependency on the determined road surface parameter (µ).

7. The method according to any one of the preceding claims,
**characterized in that**
a frictional coefficient (µ) between a vehicle tire and the road surface is determined as a road surface parameter (µ).

8. The method according to any one of the preceding claims,
**characterized in that**
the road surface parameter (µ) is determined in dependency on a parameter describing a weather condition, in particular in dependency on a temperature (T) of the surrounding area (6) and/or in dependency on a rain intensity (R).

9. The method according to any one of the preceding claims,
**characterized in that**
the road surface parameter (µ) is determined in dependency on a parameter (D_{MC}) describing a force exerted on a vehicle wheel in longitudinal direction of the vehicle (1) while decelerating the vehicle (1) by the driver.

10. The method according to any one of the preceding claims,
**characterized in that**
the autonomous braking system (2) determines whether a Anti-Lock Braking System of the vehicle (1) is activated, and while determining the road surface parameter (µ) information is considered whether the Anti-Lock Braking System is activated or not.

11. The method according to claim 10,
**characterized in that**
if the Anti-Lock Braking System is activated, the road surface parameter is determined in dependency on a lateral acceleration (q) of the vehicle (1) and/or in dependency on a parameter (a, D_{MC}) describing a force exerted on a vehicle (1) wheel in longitudinal direction of the vehicle.

12. The method according to any one of the preceding claims,
**characterized in that**
the road surface parameter (µ) is determined in dependency on a result of a comparison between a longitudinal acceleration (a, b) and a lateral acceleration (q) of the vehicle (1).

13. An autonomous braking system (2) carrying out a method according to anyone of the preceding claims.

## Patentansprüche

1. Verfahren zum autonomen Bremsen eines Kraftfahrzeugs (1) mittels eines autonomen Bremssystems (2) des Fahrzeugs (1), umfassend die nachfolgenden Schritte:
- Ermitteln eines in einem Umgebungsbereich (6) des Fahrzeugs (1) vorhandenen Hindernisses (5) mittels einer Sensorvorrichtung (7) des Fahrzeugs (1);
- autonomes Bremsen des Fahrzeugs (1) mittels des autonomen Bremssystems (2) bei Erfüllung eines Bremskriteriums hinsichtlich einer Entfernung (9) zwischen dem Hindernis (5) und dem Fahrzeug (1) mit mindestens einem für das autonome Bremsen eingestellten Bremsparameter, während ein Straßenoberflächenparameter (µ), der einen Straßenoberflächenzustand beschreibt, bestimmt und vom autonomen Bremssystem (2) für das autonome Bremsen berücksichtigt wird,
**dadurch gekennzeichnet, dass**
für das Bestimmen des Straßenoberflächenparameters (µ) mindestens zwei Straßenoberflächenparameterwerte (µ_{W}, µ_{B}, µ_{ABS}, µ_{D}) nach unterschiedlichen Schätzverfahren geschätzt werden und der Straßenoberflächenparameter (µ) aus mindestens zwei der folgenden Straßenoberflächenparameterwerte (µ_{W}, µ_{B}, µ_{ABS}, µ_{D}) berechnet wird:
- ein Straßenoberflächenparameterwert (µ_{W}), der in Abhängigkeit von einem eine Wetterlage beschreibenden Parameter, insbesondere in Abhängigkeit von einer Temperatur (T) des Umgebungsbereichs (6) und/oder in Abhängigkeit von einer Regenintensität (R) geschätzt wird;
- ein Straßenoberflächenparameterwert (µ_{B}), der in Abhängigkeit von einem Parameter (D_{MC}), der eine auf ein Rad des Fahrzeugs (1) in Längsrichtung des Fahrzeugs (1) ausgeübte Kraft beschreibt, geschätzt wird, während der Fahrer das Fahrzeug (1) abbremst;
- ein Straßenoberflächenparameterwert (µ_{ABS}), der in Abhängigkeit von einer Querbeschleunigung (q) des Fahrzeugs (1) und/oder in Abhängigkeit von einem Parameter (D_{MC}, a), der eine auf ein Rad des Fahrzeugs (1) in Längsrichtung des Fahrzeugs (1) ausgeübte Kraft beschreibt, bei Aktivierung eines Antiblockierbremssystems geschätzt wird;
- ein Straßenoberflächenparameterwert (µ_{D}), der in Abhängigkeit von einem Ergebnis eines Vergleichs zwischen einer Längsbeschleunigung (a, b) und einer Querbeschleunigung (q) des Fahrzeugs (1) geschätzt wird.

2. Verfahren nach Anspruch 1, **dadurch gekennzeichnet, dass**, während die Straßenoberflächenparameter (µ) berechnet werden, Gewichtungsfaktoren für die mindestens zwei Straßenoberflächenparameterwerte (µ_{W}, µ_{B}, µ_{ABS}, µ_{D}) benutzt werden, wobei die Gewichtungsfaktoren in Abhängigkeit von einer Fahrbedingung des Fahrzeugs (1) eingestellt werden.

3. Verfahren nach Anspruch 1 oder 2, **dadurch gekennzeichnet, dass** sich die mindestens zwei Schätzverfahren dadurch voneinander unterscheiden, dass mindestens ein unterschiedlicher Parameter (T, R, a, b, q, D_{MC}) für die Schätzung des Straßenoberflächenparameterwertes (µ_{W}, µ_{B}, µ_{ABS}, µ_{D}) benutzt wird.

4. Verfahren nach einem der vorstehend aufgeführten Ansprüche, **dadurch gekennzeichnet, dass** das Bremskriterium und/oder der mindestens eine Bremsparameter in Abhängigkeit vom bestimmten Straßenoberflächenparameter (µ) eingestellt wird.

5. Verfahren nach einem der vorstehend aufgeführten Ansprüche, **dadurch gekennzeichnet, dass** das Bremskriterium die Voraussetzung umfasst, dass die Entfernung (9) zwischen dem Hindernis (5) und dem Fahrzeug (1) einen Entfernungsgrenzwert unterschreitet, wobei der Entfernungsgrenzwert in Abhängigkeit vom bestimmten Straßenoberflächenparameter (µ) eingestellt wird.

6. Verfahren nach einem der vorstehend aufgeführten Ansprüche, **dadurch gekennzeichnet, dass** für das autonome Bremsen eine auf ein Rad des Fahrzeugs (1) ausgeübte Bremskraft als ein Bremsparameter in Abhängigkeit vom bestimmten Straßenoberflächenparameter (µ) eingestellt wird.

7. Verfahren nach einem der vorstehend aufgeführten Ansprüche, **dadurch gekennzeichnet, dass** ein Reibungskoeffizient (µ) zwischen einem Fahrzeugreifen und der Straßenoberfläche als ein Straßenoberflächenparameter (µ) bestimmt wird.

8. Verfahren nach einem der vorstehend aufgeführten Ansprüche, **dadurch gekennzeichnet, dass** der Straßenoberflächenparameter (µ) in Abhängigkeit von einem Parameter, der eine Wetterlage beschreibt, insbesondere in Abhängigkeit von einer Temperatur (T) des Umgebungsbereichs (6) und/oder in Abhängigkeit von einer Regenintensität (R) bestimmt wird.

9. Verfahren nach einem der vorstehend aufgeführten Ansprüche, **dadurch gekennzeichnet, dass** der Straßenoberflächenparameter (µ) in Abhängigkeit von einem Parameter (D_{MC}), der eine auf ein Fahrzeugrad in Längsrichtung des Fahrzeugs (1) ausgeübte Kraft beschreibt, bestimmt wird, während das Fahrzeug (1) vom Fahrer verzögert wird.

10. Verfahren nach einem der vorstehend aufgeführten Ansprüche, **dadurch gekennzeichnet, dass** das autonome Bremssystem (2) bestimmt, ob ein Antiblockierbremssystem des Fahrzeugs (1) aktiviert ist, und dass, während der Straßenoberflächenparameter (µ) bestimmt wird, die Information berücksichtigt wird, ob das Antiblockierbremssystem aktiviert ist oder nicht.

11. Verfahren nach Anspruch 10, **dadurch gekennzeichnet, dass**, wenn das Antiblockierbremssystem aktiviert ist, der Straßenoberflächenparameter in Abhängigkeit von einer Querbeschleunigung (q) des Fahrzeugs (1) und/oder in Abhängigkeit von einem Parameter (a, D_{MC}), der eine auf ein Rad des Fahrzeugs (1) in Längsrichtung des Fahrzeugs ausgeübte Kraft beschreibt, bestimmt wird.

12. Verfahren nach einem der vorstehend aufgeführten Ansprüche, **dadurch gekennzeichnet, dass** der Straßenoberflächenparameter (µ) in Abhängigkeit von einem Ergebnis eines Vergleichs zwischen einer Längsbeschleunigung (a, b) und einer Querbeschleunigung (q) des Fahrzeugs (1) bestimmt wird.

13. Autonomes Bremssystem (2) zur Durchführung eines Verfahrens nach einem der vorstehend aufgeführten Ansprüche.

## Revendications

1. Procédé de freinage autonome de véhicule (1) à moteur au moyen d'un système (2) de freinage autonome du véhicule (1), comprenant les étapes consistant à :
- détecter un obstacle (5) présent dans une zone environnante (6) du véhicule (1) au moyen d'un dispositif de capteurs (7) du véhicule (1),
- freiner de façon autonome le véhicule (1) au moyen du système (2) de freinage autonome lorsqu'un critère de freinage en ce qui concerne la distance (9) entre l'obstacle (5) et le véhicule (1) est rempli, dans lequel on fixe au moins un paramètre de freinage pour le freinage autonome,
tandis qu'un paramètre (µ) de surface de chaussée décrivant l'état de la surface de la chaussée est déterminé et pris en considération par le système (2) de freinage autonome pour un freinage autonome, **caractérisé en ce que** pour déterminer le paramètre (µ) de surface de chaussée on estime au moins deux valeurs (µ_{W}, µ_{B}, µ_{ABS}, µ_{D}) de paramètre de surface de chaussée selon différentes méthodes d'estimation, et on calcule le paramètre (µ) de surface de chaussée à partir d'au moins deux des valeurs (µ_{W}, µ_{B}, µ_{ABS}, µ_{D}) de paramètre de surface de chaussée ci-après :
- une valeur (µ_{W}) de paramètre de surface de chaussée estimée en fonction d'un paramètre décrivant une condition météorologique, en particulier en fonction de la température (T) de la zone environnante (6) et/ou en fonction de l'intensité (R) de la pluie ;
- une valeur (µ_{B}) de paramètre de surface de chaussée estimée en fonction d'un paramètre (D_{MC}) décrivant une force exercée sur une roue du véhicule (1) dans la direction longitudinale du véhicule (1) pendant que le conducteur freine le véhicule (1) ;
- une valeur (µ_{ABS}) de paramètre de surface de chaussée estimée en fonction d'une accélération latérale (q) du véhicule (1) et/ou en fonction d'un paramètre (D_{MC}, a) décrivant une force exercée sur une roue du véhicule (1) dans la direction longitudinale du véhicule (1) si un système de freinage antiblocage est activé ;
- une valeur (µ_{D}) de paramètre de surface de chaussée estimée en fonction du résultat d'une comparaison entre l'accélération longitudinale (a, b) et l'accélération latérale (q) du véhicule (1).

2. Procédé selon la revendication 1, **caractérisé en ce que** pendant le calcul des paramètres (µ) de surface de chaussée on utilise des facteurs de pondération pour lesdites deux valeurs (µ_{W}, µ_{B}, µ_{ABS}, µ_{D}) de paramètre de surface de chaussée, les facteurs de pondération étant fixés en fonction d'une condition de conduite du véhicule (1).

3. Procédé selon la revendication 1 ou 2, **caractérisé en ce que** les au moins deux méthodes d'estimation diffèrent l'une de l'autre **en ce qu'**on utilise au moins un paramètre (T, R, a, b, q, D_{MC}) différent pour estimer la valeur (µ_{W}, µ_{B}, µ_{ABS}, µ_{D}) de paramètre de surface de chaussée.

4. Procédé selon l'une quelconque des revendications précédentes, **caractérisé en ce qu'**on fixe le critère de freinage et/ou l'au moins un paramètre de freinage en fonction du paramètre (µ) déterminé de surface de chaussée.

5. Procédé selon l'une quelconque des revendications précédentes, **caractérisé en ce que** le critère de freinage comprend la condition que la distance (9) entre l'obstacle (5) et le véhicule (1) tombe en dessous d'une valeur limite de distance, la valeur limite de distance étant fixée en fonction du paramètre (µ) déterminé de surface de chaussée.

6. Procédé selon l'une quelconque des revendications précédentes, **caractérisé en ce que** pour le freinage autonome on fixe, en tant que paramètre de freinage, une force de freinage exercée sur une roue du véhicule (1) en fonction du paramètre (µ) déterminé de surface de chaussée.

7. Procédé selon l'une quelconque des revendications précédentes, **caractérisé en ce qu'**on détermine, en tant que paramètre (µ) de surface de chaussée, un coefficient de frottement (µ) entre le pneu du véhicule et la surface de la chaussée.

8. Procédé selon l'une quelconque des revendications précédentes, **caractérisé en ce que** le paramètre (µ) de surface de chaussée est déterminé en fonction d'un paramètre décrivant une condition météorologique, en particulier en fonction de la température (T) de la zone environnante (6) et/ou en fonction de l'intensité (R) de la pluie.

9. Procédé selon l'une quelconque des revendications précédentes, **caractérisé en ce que** le paramètre (µ) de surface de chaussée est déterminé en fonction d'un paramètre (D_{MC}) décrivant une force exercée sur une roue du véhicule dans la direction longitudinale du véhicule (1) pendant que le conducteur ralentit le véhicule (1).

10. Procédé selon l'une quelconque des revendications précédentes, **caractérisé en ce que** le système (2) de freinage autonome détermine si le système de freinage antiblocage du véhicule (1) est activé ou non, et pendant la détermination du paramètre (µ) de surface de chaussée l'information sur l'activation ou non du système de freinage antiblocage est prise en considération.

11. Procédé selon la revendication 10, **caractérisé en ce que**, si le système de freinage antiblocage est activé, le paramètre de surface de chaussée est déterminé en fonction d'une accélération latérale (q) du véhicule (1) et/ou en fonction d'un paramètre (a, D_{MC}) décrivant une force exercée sur une roue du véhicule (1) dans la direction longitudinale du véhicule.

12. Procédé selon l'une quelconque des revendications précédentes, **caractérisé en ce que** le paramètre (µ) de surface de chaussée est déterminé en fonction du résultat d'une comparaison entre l'accélération longitudinale (a, b) et l'accélération latérale (q) du véhicule (1).

13. Système (2) de freinage autonome mettant à exécution un procédé selon l'une quelconque des revendications précédentes.
